# EUROPEAN PATENT SPECIFICATION

(11) **EP 2 912 203 B1**
(45) Date of publication and mention of the grant of the patent: **17.09.2025**
(21) Application number: 13849028.9
(22) Date of filing: 22.10.2013
(51) Int. Cl.: C22C 1/02, C22C 1/04, C21D 6/02, C22F 1/00, B22F 3/12, F28D 20/00, C09K 5/14, F24D 15/02, C09K 5/06, C21D 1/74, C21D 1/773, C22C 21/00, F28D 20/02, C22C 33/02, C22C 32/00, C22C 33/04, C22C 38/16, C22C 38/00

(54) **METHOD FOR STORING AND DISCHARGING ENERGY THROUGH AN INVERSE MICROSTRUCTURE ALLOYS**
VERFAHREN ZUR SPEICHERUNG UND ENTLADUNG DER ENERGIE DURCH EINE LEGIERUNG MIT INVERSER MIKROSTRUKTUR
MÉTHODE DE STOCKAGE ET DE DÉCHARGE D'ÉNERGIE PAR L'INTERMÉDIAIRE D'UN ALLIAGE À MICROSTRUCTURE INVERSE

(30) Priority: 26.10.2012 AU 2012904737
(43) Date of publication of application: 02.09.2015
(73) Proprietor: MGA Thermal Pty Ltd, Tomago, NSW 2322 (AU)
(72) Inventor: KISI, Erich, Callaghan New South Wales 2308 (AU); SUGO, Heber, Callaghan New South Wales 2308 (AU); CUSKELLY, Dylan, Callaghan New South Wales 2308 (AU)
(74) Representative: Hoffmann Eitle
(86) International application number: PCT/AU2013/001227
(87) International publication number: WO 2014/063191

(56) References cited:
- EP-A1- 0 087 859
- EP-A1- 2 130 932
- ES-A2- 2 336 741
- FR-A1- 2 875 432
- GB-A- 1 454 909
- GB-A- 2 225 740
- JP-A- 2001 234 262
- JP-A- 2001 234 262
- US-A1- 2004 237 713
- US-A1- 2004 237 713
- US-A1- 2008 146 440
- US-A1- 2008 146 440
- US-A1- 2012 001 117
- STRAUMAL B ET AL: "Thermal evolution and grain boundary phase transformations in severely deformed nanograined Al-Zn alloys", ACTA MATERIALIA, ELSEVIER, OXFORD, GB, vol. 56, no. 20, 1 December 2008 (2008-12-01), pages 6123 - 6131, XP025675078, ISSN: 1359-6454, [retrieved on 20080915], DOI: 10.1016/J.ACTAMAT.2008.08.021
- SUGO HEBER ET AL: "Miscibility gap alloys with inverse microstructures and high thermal conductivity for high energy density thermal storage applications", APPLIED THERMAL ENGINEERING, PERGAMON, OXFORD, GB, vol. 51, no. 1, 29 November 2012 (2012-11-29), pages 1345 - 1350, XP028971140, ISSN: 1359-4311, DOI: 10.1016/J.APPLTHERMALENG.2012.11.029
- XIU Z ET AL: "Phase formation of Al"2O"3/Ti(C,N)-NiTi composite", JOURNAL OF ALLOYS AND COMPOUNDS, ELSEVIER SEQUOIA, LAUSANNE, CH, vol. 458, no. 1-2, 30 June 2008 (2008-06-30), pages 398 - 404, XP022647543, ISSN: 0925-8388, [retrieved on 20080507], DOI: 10.1016/J.JALLCOM.2007.03.116
- SUBRAMANIAN P.R ET AL: "The Ag-Cu (silver Copper) System", JOURNAL OF PHASE EQUILIBRIA, 31 December 1993 (1993-12-31), pages 62 - 75, XP055863093, Retrieved from the Internet <URL:https://link.springer.com/article/10.1007/BF02652162> [retrieved on 20211118]
- WANG J ET AL: "SILVER-TOUGHENED ALUMINA CERAMICS", BRITISH CERAMIC TRANSACTIONS, INSTITUTE OF MATERIALS, LONDON, GB, vol. 92, no. 2, 1 January 1993 (1993-01-01), pages 67 - 74, XP000364941, ISSN: 0967-9782
- SUN XUDONG ET AL: "Microstructure and fracture toughness of nickel particle toughened alumina matrix composites", JOURNAL OF MATERIAL SCIENCE, vol. 31, no. 4, 1 February 1996 (1996-02-01), Dordrecht, pages 875 - 880, XP093136864, ISSN: 0022-2461, DOI: 10.1007/BF00352885
- APPLIED THERMAL ENDEINEERING, vol. 51, no. 1-2, March 2013 (2013-03-01), pages 1345 - 1350, XP028971140, Retrieved from the Internet <URL:http://www.sciencedirect.com/science/article/piiS1359431112007818http//journalsohiolinkedu/eje/article.cpi?issn-1359431-2&article__1345_mgdwimhedtsa> [retrieved on 20121129]

## Description

### Technical Field

The invention relates to alloys with inverse microstructures, to the production of such materials and to their uses in thermal storage applications.

### Background

The global momentum to develop renewable sources of energy that do not overly disrupt the natural environment has been building for some decades. The IEA World Energy Outlook 2009[1] indicates that a speedy transition is required to stabilise the concentration of greenhouse gases at 450ppm. Delays in the implementation of renewable and carbon neutral energy sources not only narrows the window for action but also increases the cost of transforming the energy sector by an estimated $500 billion per year [1]. With the exception of geothermal and hydroelectricity all other forms of renewable energy suffer from intermittency. Diurnal cycle and weather excursions directly affect solar generation but wind and wave sources are also intermittent.

Energy storage by chemical, electrochemical or mechanical means are all subject to energy losses in the storage-recovery cycle additional to those associated with eventual energy utilisation. For thermal sources of energy, direct Thermal Energy Storage (TES) can be made extremely efficient, suffering only environmental losses through the insulation envelope. For example, sensible heat based concentrated solar thermal (CST) plants, which use thousands of tonnes of molten KNO₃/NaNO₃ salt for sensible heat storage, have a return efficiency in the order of 99% [2].

The application of efficient thermal energy storage systems to capture heat from renewable sources like solar or waste heat from existing industries can offer significant savings and reduction in the emission of greenhouse gases. It is estimated that in 2008 the USA consumed 33.5EJ (10¹⁸J) as heat for applications at temperatures below 300°C [3]. Approximately 50% was consumed by residential space heating applications with the remainder being utilized by industry for low-temperature steam generation and process drying. CST technologies such as trough collectors and tower receivers are well advanced and could potentially replace combustion of fossil fuels for these applications provided efficient TES systems are developed to overcome intermittency of supply due to the daily solar cycle and weather excursions. If effective thermal storage solutions are developed, the range of applications is not limited to renewable energy sources. The technology can also be used for load shifting applications and thermal inertia/overload protection in electric motors or even micro-electronics [4].

Various thermal storage options have been previously discussed in the literature e.g. [5] and include direct storage as sensible heat due to temperature rise or latent heat due to a phase change. Over the last 20 years there has been extensive research into both forms of TES which has resulted in widespread publication of thermophysical data for organic materials, inorganic salts and some metallic systems [5-8]. It is clear that the phase change systems exhibit the highest storage density. The key design parameters for deployment of TES are based on the energy density per unit volume, time delay between recharge-discharge and costs. Hence research work has also extended to the development of mathematical models for predicting input and extraction rates of energy from various systems [4]. The state of the art technology for high energy density Phase Change Material (PCM) based TES is considered to be NaNO₃/KNO₃ eutectic salts or paraffin products combined with heat transfer enhancement technologies. These are necessary to improve the poor thermal conductivity of organic/inorganic salts which are in the order of 0.22-0.75W/m/K respectively [4, 9].

Numerous heat transfer enhancement techniques have been developed. For paraffin based systems, metallic particulates, foams and fins or expanded graphite particulates are used [4]. For NaNO₃/KNO₃ eutectic materials, the use of expanded graphite particulates, fibres or fins have been reported [6]. Design of TES systems vary but generally resemble conventional finned-coil heat exchangers circulating either a heat transfer fluid or steam during the charge/discharge cycle [10].

Metallic systems have also been employed as PCM thermal storage systems. Metals are suitable as PCMs due to their high temperature phase change, good thermal stability and reliability, and large heats of fusion on a mass basis. Several candidates have been reported by Sharma [5] and Kenisarin [6]. Detailed data of the performance over 1000 heating/cooling cycles of an Al-Mg-Zn eutectic alloy was described by Sun et.al. [7]. The overall performance was very promising, however a slight reduction in phase transition temperature of 3-5.3°C after 1000 cycles with an accompanying reduction of 11.1% in the latent heat of fusion was reported. Microstructural investigations indicated a change in the morphology of the eutectic phase with some additional microconstituents being formed, possibly as a result of the interaction with the stainless steel containment vessel.

Moruoka *et.al.* [11] carried out an energy density and cost benefit analysis for potential PCM aimed at waste heat recovery between 927°C and 1527°C and found copper to be an ideal candidate. Copper balls were initially coated with nickel to act as an encapsulant and catalyst for hydrogen reforming. Failure of the nickel coating was observed during experimentation and to resolve the problem a layer of carbon or ruthenium was introduced at the copper/nickel interface. Whilst not directly identified by Moruoka *et.al.* the failure mechanism of the nickel coating can be attributed to the complete solid-solubility of nickel in copper. The carbon or ruthenium layer acted as a diffusion barrier to hinder the solution of these completely miscible metals.

EP 0 087 859 A1 [15] relates to a thermal energy storage composition comprising a thermal energy storage material. ES 2 336 741 A2 [16] relates to the use of phase change materials in the manufacture of vehicle tires. FR 2 875 432 A1 [17] relates to a solid porous matrix containing microencapsulated phase change material.

Any discussion of the prior art throughout the specification should in no way be considered as an admission that such prior art is widely known or forms part of common general knowledge in the field.

It is an object of the present invention to overcome or ameliorate at least one of the disadvantages of the prior art, or to provide a useful alternative, preferably a method of storing and discharging energy that make use of new materials that are suitable for use as high energy density high thermal conductivity thermal storage materials.

### Summary

The present inventors have discovered that thermodynamically stable miscibility gap binary metallic systems that operate through the latent heat of fusion of the dispersed component delivered through a high thermal conductivity matrix phase are useful as thermal storage materials.

According to a broad first aspect useful for understanding the invention a thermal storage material comprises:
(i) a dense continuous thermally conductive matrix of a first component;
(ii) particles of a second component dispersed throughout the matrix of the first component;
wherein the first and second components are wholly or partly immiscible and wherein the first component melts at a higher temperature than the second component.

The present invention is defined in and by the appended claims. In particular, the present invention is directed towards a method of storing and discharging energy that operates through the latent heat of fusion of a dispersed component, as outlined in claim 1. Further embodiments are subject to the dependent claims.

Throughout the present invention, the particles of the second component are microparticles. A microparticle could be a particle of a specified size, for example, 1mm or less, or alternatively a microparticle could be defined as a particle of at least two orders of magnitude (>100x) smaller than the overall storage block dimension into which the thermal storage material is formed .

According to a first aspect useful for understanding the invention, a thermal storage material comprises:
(i) a dense continuous thermally conductive matrix of a first component;
(ii) particles of a second component dispersed throughout the matrix of the first component and present in an amount of at least q% by volume of the thermal storage material;
wherein the first and second components are wholly or partly immiscible and wherein the first component melts at a higher temperature than the second component.

Preferably, q% is at least 15%, more preferably 20%, more preferably 25%, more preferably 30%.

The second component is present in an amount of 10% to less than 70% by volume of the thermal storage material.

The first component may be formed from a single compound or element, or it may be a mixture of compounds or elements. Likewise, the second component, which is fusible, may be a single compound or element or it may be a mixture of compounds or elements. In the simplest case, where the first and second components are elemental or a single compound, the overall system will be a binary system having two discrete phases. In cases where one component is an alloy of two elements or compounds, and the other component is an element or single compound, the system will be a ternary system having two discrete phases. Ternary, quaternary and higher systems are possible depending upon the constituents of the system, that is if the first component has n compounds or elements and the second component has m compounds or elements, the phase diagram will be an n+m system. The critical factor in the selection of the combination of first component and second component is the presence of a miscibility gap in the relevant phase diagram.

In one embodiment, the first component is metallic and the second component is metallic. Alternatively, the first component is metallic and the second component is non-metallic, or the first component is non-metallic and the second component is metallic. Alternatively, both the first and second components are non-metallic. Each metallic component may be elemental or it may be an alloy or metallic compound. If the component is a non-metallic component it may be for example an inorganic material such as a salt or mixture of salts.

Preferably the second component is present in an amount of at least 30% by volume of the thermal storage material, more preferably the second component is present in an amount of at least 35% by volume of the thermal storage material or even more preferably the second component is present in an amount of at least 50% by volume of the thermal storage material. The second component is present in an amount of at less than about 70% by volume of the thermal storage material.

The particles are preferably sized so as to avoid problems due to thermal expansion. In one embodiment the particles of the second component are <100µm or even <80µm in size.

Preferably the first component is selected from the group consisting of Al, Fe, C and SiC. Preferably the second component is selected from the group consisting of Sn, Bi, Mg, Cu and Si. In one preferred embodiment the first component is Al and the second component is Sn. In another preferred embodiment the first component is Al and the second component is Bi. In another preferred embodiment the first component is Fe and second component is Mg. In another preferred embodiment the first component is Fe and second component is Cu. In another preferred embodiment the first component is C in graphite form and second component is Cu. In another preferred embodiment the first component is SiC and the second component is Si.

Preferably, when the first component is Al, then the second component is not Pb in an amount of 3 - 26%

The inverse microstructure is such that the matrix of the first component contains and confines the second component, including when the second component is in a molten or flowable state.

According to a second aspect useful for understanding the invention, a method of forming a thermal storage material comprises:
a) forming a molten mixture of a first component and a second component wherein the first and second components are wholly or partly immiscible when solid but miscible when liquid and the first component melts at a higher temperature than the second component;
b) rapidly cooling the molten mixture to provide an unstable solid solution;
c) reheating the unstable solid solution to below the melting temperature of the second component to promote solid state precipitation wherein solid particles of the second component are dispersed throughout a matrix of the first component.

According to a third aspect useful for understanding the invention, a method of forming a thermal storage material comprises:
a) preparing a blend of a powder of a first component and a second component wherein the first and second components are wholly or partly immiscible and the first component melts at a higher temperature than the second component;
b) pressing the blend;
c) and sintering the blend to provide, upon cooling, solid particles of the second component dispersed throughout a solid matrix of the first component.

Preferably the pressing takes place at a pressure where the localised (at points of powder contact) pressure exceeds the yield stress (elastic limit) of the first component.

Preferably the sintering takes place at a temperature chosen to promote solid state cohesion of the first component. Preferably the pressing and/or sintering takes place under an inert atmosphere or vacuum.

The invention provides a method of storing and discharging energy that operates through the latent heat of fusion of a dispersed component, the method comprising:
thermally contacting a thermal storage material with a thermal energy source to heat the thermal storage material by thermal absorption thereto, thereby to provide a charged thermal storage material;
thermally contacting the charged thermal storage material with a thermal sink, to cool the thermal storage material by thermal emission therefrom, thereby to provide a discharged thermal storage material; and wherein the thermal storage material comprises:
   (i) a dense continuous thermally conductive matrix of a first component;
   (ii) solid microparticles of a second fusible component dispersed throughout the matrix of the first component;
wherein the first component is metallic and the second component is metallic;
wherein the first and second metals are wholly or partly immiscible and wherein the first component melts at a higher temperature than the second component;
wherein the first component encapsulates the second component, including when the second component is in a molten or flowable state; and
wherein the second component is present in an amount of 10% to less than 70% by volume of the thermal storage material.

The thermal contact of the thermal storage material with the thermal energy source or thermal energy sink may be by any type of heat transfer, for example, the heat may be conducted by direct transfer, it may be convected by a gas or fluid or it may be radiated. The thermal contact of the thermal storage material with the thermal energy source or thermal energy sink may be direct from one to the other or it may be via an intermediate.

In addition, the invention provides a method of storing and discharging energy that operates through the latent heat of fusion of a dispersed component, the method comprising:
contacting a thermal storage material with a thermal energy source to heat the thermal storage material by thermal absorption thereto, thereby to provide a charged thermal storage material;
   contacting the charged thermal storage material with a thermal sink, to cool the thermal storage material by thermal emission therefrom, thereby to provide a discharged thermal storage material; and wherein the thermal storage material is a thermal storage material comprising:
      (i) a dense continuous thermally conductive matrix of a first component;
      (ii) microparticles of a second component dispersed throughout the matrix of the first component;
   wherein the first and second components are wholly or partly immiscible and wherein the first component melts at a higher temperature than the second component;
   wherein the first component encapsulates the second component, including when the second component is in a molten or flowable state;
   wherein the second component is present in an amount of 10% to less than 70% by volume of the thermal storage material; and
   wherein the first component is metallic and the second component is metallic; or
   wherein the first component is metallic and the second component is non-metallic; or
wherein the first component is non-metallic and the second component is metallic.

Table 1, below, shows a range of miscibility gap thermal storage systems expected to produce inverse microstructure alloys of the present invention.

The transition temperature is the melting point of the low melting point (dispersed) component and which dictates the storage temperature properties of the material. The Table also shows the relative composition ranges of each component that are capable of production as inverse microstructure alloys of the present invention.

**Table 1: Potential binary miscibility gap thermal storage systems.**

| **Phase 1 (matrix)** | **Phase 2 (fusible phase)** | **Transition T (°C)** | **Composition** |
|---|---|---|---|
| Al | Pb | 327 | 0 - 99.2%Pb |
| C | Cu | 1085 | all |
| C | Zn | 419 | all |
| Fe | Cu | 1094 | 8 - 96%Cu |
| Cu | Pb | 326 | all |
| Fe | Pb | 327 | all |
| Al | Sn | 228 | 0 - 99.4%Sn |
| Fe | C-Fe eutectic | 1154 | <95.7 %Fe |
| W | Ag | 962 | all |
| Al | Cd | 320 | 7 - 98.7%Cd |
| Al | In | 156 | 17.3 - 97%In |
| B | Bi | 271 | all |
| B | Ga | 29.6 | all |
| B | Ge | 938 | 8 - 100%Ge |
| B | In | 157 | all |
| B | Pb | 327 | 0 - 99%Pb |
| B | Sb | 631 | all |
| B | Sn | 232 | 0 - 99%Pb |
| B | Zn | 419 | all |
| Co | Bi | 258 | 7 - 97%Bi |
| Fe | Bi | 271 | all |
| Ni | Bi | 654 | 0 - 74%Bi |
| C | Ge | 938 | all |
| Nb | Cu | 1085 | 0.8 - 100%Cu |
| Nb | Mg | 650 | all |
| Ge | Cd | 318 | 0 - 99.85%Cd |
| Mo | Cd | 321 | 0 - 99%Cd |
| Co | Cu | 1112 | 21 - 90%Cu |
| Co | Pb | 326 | all |
| Cr | Pb | 327 | all |
| Cr | Sn | 230 | 0 - 99%Sn |
| Mo | Cu | 1083 | 0 - 99%Cu |
| Cu | Tl | 302 | 1 - 94%Tl |
| V | Cu | 1085 | 3 - 100%Cu |
| Fe | In | 156 | 1 - 99%In |
| Fe | Mg | 650 | 0 - 99.9%Mg |
| Re | Ga | 29.8 | all |
| Tl | Ga | 29.7 | 3 - 95%Ga |
| Nb | Mg | 650 | 1 - 99%Mg |
| V | Mg | 650 | all |
| Mo | Mo₃Sb₇ | 780 | 0 - 74%Sb |
| Ni | Pb | 324 | 3 - 99.9%Pb |
| Ni | Tl | 304 | 4 - 100%Tl |
| Zn | Pb | 318 | 0 - 99.5%Pb |
| Sc | Sr | 768 | 3 - 100%Sr |
| ZnSe | Zn | 419 | 0 - 46%Zn |
| ZnSe | Se | 221 | 54 - 100%Se |
| Si | Sn | 232 | all |
| Si | Zn | 419 | all |
| Ti | Mg | 651 | all |
| Ti | Sr | 769 | all |
| V | Sr | 769 | all |
| Y | Sr | 739 | 2 - 99.5%Sr |
| TeZn | Te | 447 | 66 - 100%Te |
| TeZn | Zn | 419 | 0 - 34%Zn |
| Zn | Tl | 292 | 3 - 96%Tl |
| V | Y | 1455 | 0 - 93%Y |
| W | Y | 1520 | 0.25 - 100%Y |
| B | Cd | 321 | all |
| Cu | Bi | 271 | 0 - 99.8%Bi |
| Bi | Ga | 29 | 0 - 99.3%Ga |
| Zn | Bi | 255 | 0 - 97.3%Bi |
| C | Ni | 1327 | 0 - 99.4%Ni |
| SiC | Si | 1404 | 70 - 100%Si |
| Cr | Cu | 1077 | 0 - 98%Cu |
| Ge | Ga | 29.8 | all |
| Zn | In | 144 | 0 - 97%Zn |
| Mn | Pb | 327 | all |
| Ta | Sc | 1519 | 0 - 88.3%Sc |
| Ta | Y | 1478 | 0 - 99.5%Y |
| Ge | Bi | 271 | all |
| Al | Bi | 270 | 3.4 - 97.6%Bi |
| Fe | Zn | 780 | 46%<Zn<92% |
| W | Pb | 1815 | >68%Pb |
| TiB₂ | B | 2080 | 32 - 100%B |
| Cr | Bi | 271 | all |
| C | Co | 1320 | 0 - 97%Co |
| Ni | CdNi | 690 | 66 - 100%Cd |
| ZrCr₂ | Cr | 1332 | 50 - 86%Zr |
| FeSi | Si | 1200 | 25 - 50%Si |
| GaSb | Ga | 29.7 | 0 - 36%Ga |
| W | Sc | 1510 | 0 - 90%Sc |
| Nb | Al | 661 | 0 - 54% Al |
| Bi | In | 109 | 0 - 33%In |
| Zn | Cd | 266 | 0 - 83%Cd |
| Sn | Ga | 21 | 4 - 86.3%Ga |
| Zn | Ga | 25 | 2 - 96.5%Ga |
| Mo | Y | 1430 | 0 - 90%Y |
| W | Ni | 1495 | 0 - 65%Ni |
| Sb | Pb | 252 | 3 - 89%Pb |
| Sn | Sn+Pb | 183 | 0 - 40%Pb |
| V | Sc | 1410 | 2 - 86%Sc |
| Zn | Sn | 198 | 0 - 91%Sn |
| Ti | Y | 1355 | 4 - 42%Y |

### Description of the Drawings

Figure 1 shows an Al-Sn phase diagram [13] illustrating the immiscibility of molten tin and solid aluminium.
Figure 2 is a scanning electron micrograph of an Al-Sn alloy cast and allowed to air cool. The dark grey phase is Al and the mid-grey phase Sn.
Figure 3 is a secondary electron image of an Al-35 vol %Sn thermal storage alloy demonstrating the inverse microstructure. The dark grey phase is Al and the brighter phase Sn, now reversed in distribution with respect to Figure 2.
Figure 4 is a Cu Kα XRD pattern of the Al-Sn alloy demonstrating only Al and Sn as major phases. Al peaks are marked with a diamond and Sn peaks are marked with an asterisk.
Figure 5 is a backscattered electron image of Fe-Cu thermal storage alloy demonstrating the inverse microstructure. The brighter circular phase is Cu and the darker matrix is Fe.
Figure 6 is a Cu Kα XRD pattern of the Fe-Cu alloy demonstrating only Fe and Cu as major phases. Fe peaks are marked with a plus sign (+) and Cu peaks are marked with a filled circle (•).
Figure 7 is DTA curves illustrating the uptake and delivery of heat in the Al-Sn alloy. Note the steep temperature rise on cooling as latent heat is released followed by cooling according to Newton's law of cooling.
Figure 8 is DTA curves illustrating the uptake and delivery of heat in the Fe-Cu alloy for the first three thermal cycles.

### Description

When two metals are mixed in a fixed ratio in the liquid state and allowed to solidify, they may, if miscible, form a solid solution by mixing randomly; or form an intermetallic compound by mixing in an ordered structure. If the metals are immiscible, they de-mix and solidify as a mixture of two distinct solid phases.

The present inventors have found that high temperature thermal storage is most efficient and compact using thermodynamically stable two phase mixtures in which the active phase that undergoes melting and solidification during charge-discharge cycle is present as discrete particles fully enclosed within a dense, continuous, thermally conductive matrix.

The present inventors have found that the best way to construct such a microstructure is to exploit miscibility gaps in the phase diagrams of some alloys. A miscibility gap means that there is to some extent immiscibility between the components of an alloy, and at certain ratios and temperatures two phases will co-exist.

In most alloys of this type, the high melting point phase is trapped within a matrix of low melting point material. However, in the present invention, the alloys have an "inverse microstructure" which means that the low melting point high energy density phase is trapped as small particles within a high thermal conductivity metal matrix that can deliver heat rapidly over large distances. These new systems have the potential to overcome the conductivity, energy density, corrosion and instability problems of conventional phase change thermal storage systems.

A system that has an active dispersed phase inherently immiscible with a high thermal conductivity metal matrix can overcome the shortcomings of many current TES systems. In such an inverse microstructure, where the active (melting) phase is present as microparticles, these will release intense bursts of latent heat locally during discharge (solidification) which is then conducted away by the surrounding matrix phase (and vice versa during charging). The advantages of such a material include:
- High energy density per unit volume by capitalising on the high latent heat of fusion per unit volume of metals. In many cases, 0.2-2.3 MJ/L at 50% loading of the active (melting) phase or even higher can be achieved. The volume of such storage devices is therefore relatively low compared to the energy they store.
- A range of melting temperatures for active phases are available and therefore the materials may be individually matched to useful operating temperatures: low temperatures (<300°C) for applications such as space heating, mid-range temperatures (300°C-400°C) and high temperatures (400°C-600°C) for steam turbine electricity generation and even higher (600°C-1400°C) for high temperature industrial processes.
- Latent heat is delivered (or accepted) a over a narrow temperature range allowing more precise control of process parameters and, in terms of steam generation, would allow for easier matching of turbine-generator.
- Since the heat is delivered to and retrieved from the PCM by conduction alone, there is no need to transport the molten phase around the system and very high heat transfer rates are possible.
- No special containment is necessary as the matrix phase remains solid at all times and encapsulates the active phase.
- Chemical reactions between component materials are avoided as the two materials are thermodynamically stable and immiscible, which means the system is likely to remain sTable over long periods of time.

These characteristics avoid the major difficulties with many PCM systems published to date, including corrosion and degradation of metallic components in salt-based phase change materials, low heat transfer rates and low energy density.

Table 2 shows the properties of some exemplary PCMs of the present invention in addition to some comparative PCM systems. The key variables are (i) the melting temperature of the active phase which determines the charge-discharge temperature and hence the suitability of a material for a given application; and (ii) the energy density in MJ/litre which determines the overall size of thermal storage infrastructure. Data for an organic PCM Paraffin (PCM-1) and a molten salt PCM KNO₃-NaNO₃ eutectic (PCM-2) are given at the top of the Table in order to allow comparison with two state of the art conventional phase change systems. Similarly, a comparison with sensible heat storage is enabled by the sixth column which indicates the temperature rise in each system to store, as sensible heat, an equivalent amount of energy to the latent heat.

**Table 2: Some Candidate thermal storage systems compared with state of the art PCMs**

| System | Fusible Phase | | | | | Thermal Conductivity |
|---|---|---|---|---|---|---|
| | Phase | Melting | Heat of | Energy | Equivalent | |
| | Name | Temperature (°C) | Fusion kJ kg | Density* MJ L | Temperature Range of Sensible Heat in PCM-2 (°C) | of Matrix Phase W mK |
| Conventional PCMs | | | | | | |
| PCM-1 Organic | Paraffin C20-33 [12] | 50 | 189 | 0.17 | 76 | <1 |
| PCM-2 Salt | KNO₃ - NaNO₃ Eutectic [10] | 221 | 100 | 0.204 | 70 | <1 |

| Inverse microstructure PCMs of the present invention | | | | | | |
|---|---|---|---|---|---|---|
| Al-Sn | Sn | 232 | 59 | 0.43 | 257 | 237 |
| Al-Bi | Bi | 271 | 52 | 0.51 | 433 | 237 |
| Fe-Mg | Mg | 650 | 370 | 0.64 | 363 | 80 |
| Fe-Cu | Cu | 1085 | 205 | 1.84 | 526 | 80 |
| C-Cu | Cu | 1085 | 205 | 1.84 | 526 | 200 |
| SiC-Si | Si | 1410 | 1926 | 4.49 | 2713 | 200 |

| | | | | | | |
|---|---|---|---|---|---|---|
| Immiscible binary alloy systems sourced from [13], enthalpy data from [14]. * The energy density shown is for the active phase only. | | | | | | |

It may be readily seen from the Table that the two systems explicitly exemplified in the present study, Al-Sn and Fe-Cu, have significantly greater energy density and perhaps more significantly, thermal conductivity approximately two orders of magnitude greater than conventional PCMs. In addition to these qualities, the two systems exemplified have useful operating temperatures for space-heating applications (Al-Sn) and steam turbine electricity generation (Fe-Cu), are abundant, have established refinement and processing technologies, and are readily recycled.

In order to realise the potential shown by these materials, the active thermal storage phase needs to be fully encapsulated within a dense, highly conductive matrix phase. Such a microstructure is the opposite of that expected and normally arising for a two phase alloy solidifying from the melt and thus the means by which this microstructure can be formed is a central problem addressed by the present inventors.

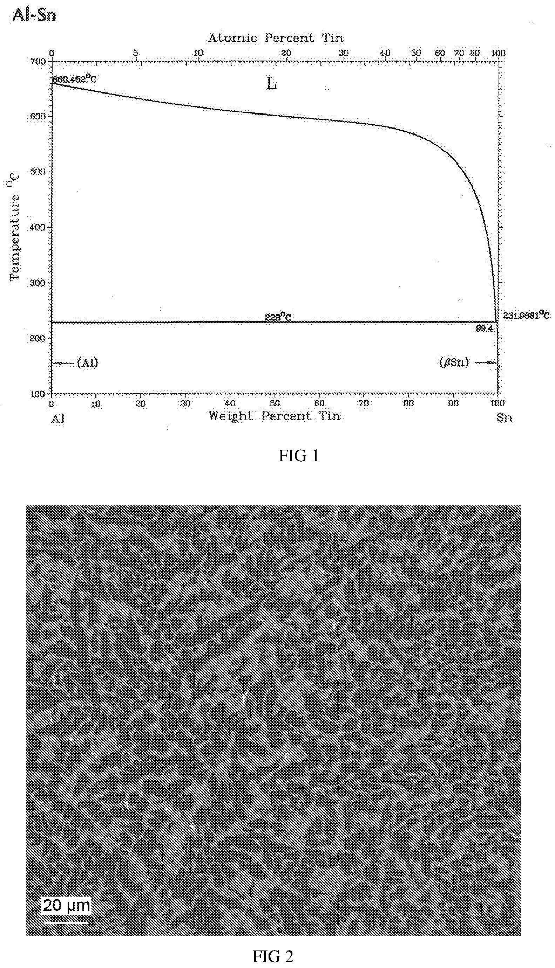

To illustrate, with reference to Figure 1, on cooling a Sn-Al alloy containing 50 wt% Sn from 600°C to 230°C, relatively pure solid aluminium and a tin-rich liquid will co-exist.

Natural cooling below 228°C produces a continuous Sn-rich matrix as shown by the mid-gray phase in Figure 2, with encapsulated Al particles (the dark phase).

What is required in the case of the present invention is the opposite of the natural, inherently formed microstructure. The present invention requires the inverse microstructure comprising a continuous, highly conductive, Al matrix with Sn-rich particles fully encapsulated within it.

In order to obtain such a microstructure, the present inventors have devised two methods of synthesis.

In the first method of forming an inverse microstructure PCM, which is applicable to systems with slow diffusion kinetics for de-mixing, precipitation of the low melting temperature phase is suppressed by rapid cooling to form an unstable solid solution (e.g. if the 50% Sn alloy above could be quenched to room temperature at a sufficient rate). The active phase is then formed by solid-state precipitation and growth upon re-heating the material within the range below the melting temperature of the active phase (e.g. below 228°C in this case).

In the second method of forming an inverse microstructure PCM, which is applicable to systems with rapid diffusion kinetics, the individual components are mixed as powders which are pressed and sintered using techniques routinely applied in industry for producing a range of solid engineering components. By way of this process, solid state diffusion causes the matrix material to become fused into a continuous body, completely encapsulating the active phase.

### Examples

### Production of Inverse Microstructure PCMs by Solid-State Precipitation

This method relies upon rapid solidification from the molten or partially molten state followed by a precipitation heat treatment. It is applicable in those cases where the components of the thermal storage material are miscible in a liquid state, but not in a solid state. If such mixtures are cooled at a slow rate, demixing occurs. However, if the cooling occurs at a sufficiently fast rate the mixture becomes frozen. What is a sufficiently fast rate depends upon the materials involved. Cooling rates of 1000°C/second would be typical for non-metallic systems but cooling rates of 1,000,000°C/second or more may be required for metals. By subsequent re-heating at a temperature intermediate the melting temperatures of the two phases, particles of the dispersed phase will form. Rapid solidification may be achieved in a number of ways including but not limited to:
i) Quenching into a bath of a liquid at a much lower temperature
ii) Quenching into a stream of cold gas
iii) Quenching onto a cold solid substrate
iv) Weld deposition or laser deposition on to a cold metal substrate

The heat treatment step is achieved in an inert gas furnace by re-heating the component in the temperature range below the melting temperature of the second (lower melting temperature) component; the heating temperature and time at temperature to be determined for each applicable system.

Quenching into a bath of liquid or cold gas stream could be used to make a powdered feed stock that could be pressed into useful sized thermal storage blocks. The sintering process could be used in such cases to both reheat and precipitate the dispersed phase.

Weld deposition or laser deposition on to a cold metal substrate leads to relatively thin coatings. These could be provided as direct coatings onto pipes or other components that require thermal load leveling.

### Production of Inverse Microstructure PCMs by Pressing and Sintering

Two prototype thermal storage alloys were produced using the powder starting materials; Sn (Towson & Mercer Distributors, London, <200 mesh), Al (Alloys International, Australasia, <75 µm), Fe (International Nickel Company, London, Grade MHCP) and Cu spheres (MicroMet, GmbH, <80µm). Samples comprising 35 vol% Sn in Al and 35 vol% Cu in Fe were made by simple powder metallurgy in the form of mixing, uniaxial pressing in a 16mm die at 300MPa and subsequent sintering at 500°C (Sn-Al) or 1000°C (Cu-Fe) in an inert argon atmosphere.

The sintering temperature is chosen to promote solid state cohesion of the matrix (first, higher melting temperature component). As a guide, 0.7xTₘ may be used, where Tₘ refers to the melting temperature of the higher melting temperature component in Kelvin (K).

For the Cu-Fe system this gives 993°C which was rounded to 1000°C for convenience. For the Sn-Al system, 0.7xTₘ equals 380°C however the more adherent oxide layer on Al powders necessitates use of a higher temperature (0.8xTₘ) in that case. The melting temperature of the second component is not important in the choice of sintering temperature although particles of different shapes result if the second component melts during sintering.

Pressureless sintering is the preferred option in the present case, although related processes such as hot pressing, hot isostatic pressing and sinter-forging may be used, however the present inventors have found that these are more costly, restrict the shapes that can be made, may squeeze the second component out of the material etc.

Sintered samples were dressed and polished for Metallurgical examination using optical and Scanning Electron Microscopy (SEM). The phase identity was established and contaminant phases searched for using X-ray diffraction (XRD). Samples were then studied using a simple DTA arrangement and the raw signal Fourier filtered to remove high frequency noise. Rather than the tiny samples typically used for DSC/DTA measurements, DTA was based around the entire 30g sample in order to better provide a more realistic result in the context of larger thermal storage applications. The pure matrix phase, Al was used as the reference material in the Al-Sn case and a low carbon steel (>99% Fe) in the Fe-Cu case.

### Microstructural and XRD Analysis

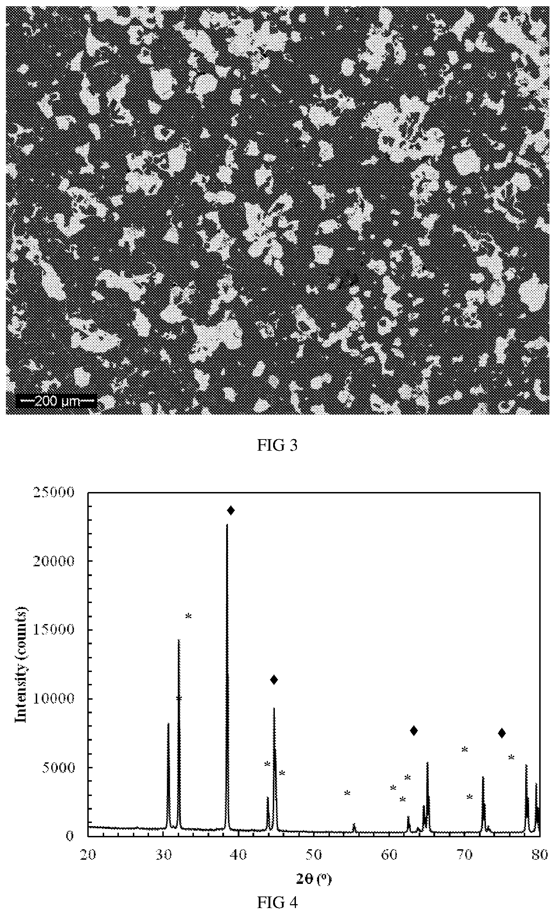

Figure 3 shows the microstructure of an Al-Sn prototype thermal storage material made according to the methods of the present invention. Note the complete isolation of the Sn regions (pale phase) from each other. This has two major consequences; it prevents draining and loss of the molten phase at the elevated temperature and it ensures continuous heat transfer paths from the phase undergoing melting (or solidification) to the exterior during charging (or, respectively, discharging). The uniformity of distribution of Sn particles and the fraction of unfilled cavities can be changed by adjustments to the processing parameters. The sintering used to create the material in Figure 3 was pressureless; hence a small fraction of unfilled cavities can be seen in the material.

The corresponding X-ray Diffraction pattern is shown in Figure 4. It is essentially free from peaks associated with contaminants or intermetallic compounds, containing very strong diffraction peaks from the Al and Sn phases.

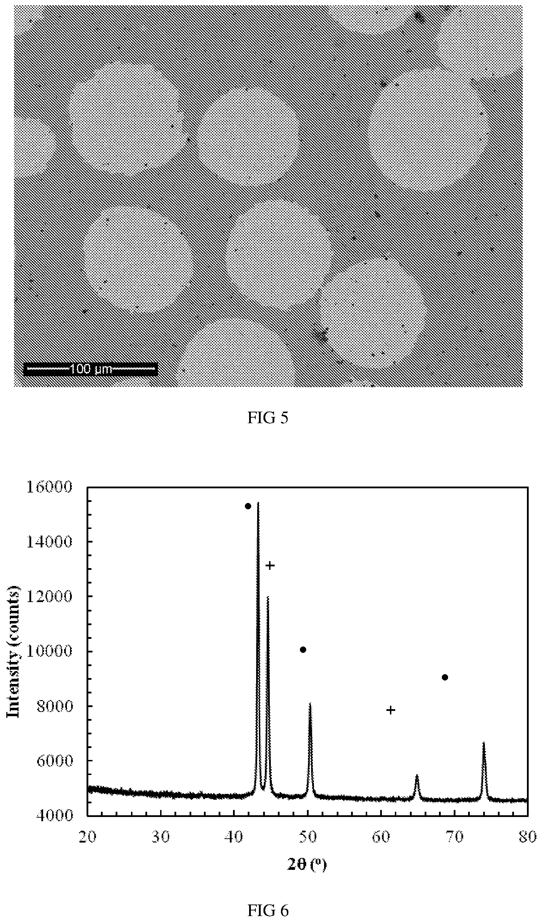

The microstructure of the Fe-Cu system is shown in Figure 5. In this case, the sintering temperature of the matrix was lower than the melting temperature of the active phase (Cu) and so the Cu spheres have kept their shape very well with little agglomeration. This was most likely assisted by the particle size of the Fe powder being smaller than the Cu spheres.

Thus, the metallographic examination shown in Figures 3 and 5 of the Al-Sn and Fe-Cu alloys indicate that the desired inverse microstructures have been obtained with the active phase being encapsulated by the higher melting point matrix. The dispersion of Cu in Fe is very regular whereas that of Sn in Al is not even but can be improved by the use of more regular shaped particles as starting material (similar to the Cu spheres) or if the sintering temperature was reduced to below the melting point of Sn (<232°C). Only two significant micro-constituents can be observed in each system with no intermetallic compounds being formed. This is confirmed by the XRD patterns in Figures 4 and 6.

One advantage of containing the active phase within an immiscible (or largely immiscible) matrix is demonstrated by the micrographs and XRD plots. Contamination of the active phase with constituents from the containment vessel, as seen in the case where a conventional PCM is contained in a vessel, such as experienced by Sun et.al. [6] is eliminated. Therefore, no reduction in melting temperature or latent heat of fusion has been observed or is anticipated over time.

### Charge-Discharge Cycles and Energy Density

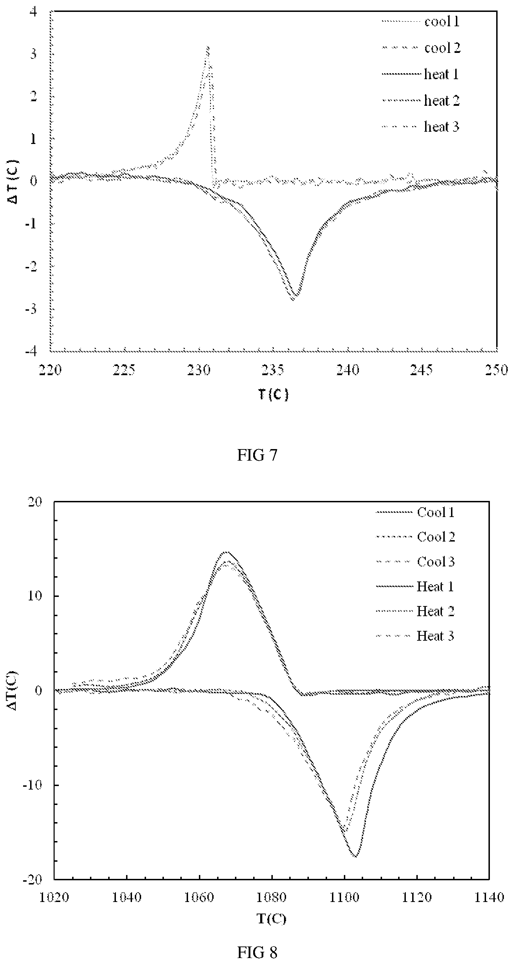

Thermal cycling around the melting point of the active phase demonstrates the charge-discharge behaviour of each system. Figure 7 shows the behaviour of the Al-Sn system over 3 consecutive cycles in a sample previously cycled approximately 30 times. It is clear that although there is some smearing and hysteresis of the solid-liquid-solid transition, the entire charge-discharge cycle occurs within a 22°C range (224-246°C) allowing for relatively constant temperature heat delivery during discharge from larger volumes of material. On heating, melting typically begins at 228°C in agreement with the phase diagram. Solidification occurs at 232°C during the cooling stage. The freezing curve rises extremely sharply with a trailing edge conforming to Newton's law of cooling. In the raw data, only 4s elapse before the temperature excursion permeates the entire sample. This extreme rate can be attributed to the very high thermal conductivity of the Al matrix. Over the 3 charge-discharge cycles no significant changes in the onset of melting or solidification can be observed. The tight grouping of the heating/cooling curves implies that no measurable reduction in energy capacity (storage/release) occurred.

Similar behaviour is demonstrated by the Cu-Fe system shown in Figure 8. Again three heating/cooling cycles are shown. Unlike the Al-Sn system, these were the initial 3 cycles and a shift in the heating curve of 1.9°C was observed between the first and second endotherms and a further 1.5°C between the second and third. This is due to the effect of the confinement due to the surrounding matrix which provides a large isostatic pressure and increases the melting temperature of Cu. After the first two cycles, there has been sufficient time for creep relaxation to occur and accommodate most of the volume change on melting and the thermal expansion difference. The higher energy density of the Cu active phase is evident by the stronger endotherms and exotherms. For these systems the energy density was 0.151 MJ/L and 0.641 MJ/L for the Al-Sn and Fe-Cu respectively.

Even higher energy density is possible by either increasing the volume fraction of the active phase or by selecting systems with a higher latent heat of fusion.

Considering the first strategy - increased volume fraction, the maximum volume fractions for discrete active phase spherical particles dispersed in a continuous matrix is limited by the percolation limit of ~70% by volume. At this volume fraction continuous paths connecting the active phase particles would be expected to allow draining of the molten phase at high temperatures.

In the second strategy, systems with higher latent heats of fusion are sought. Table 1 is only a brief extract to demonstrate the application of immiscibility systems for TES. The energy density achieved by the Al-Sn alloys is approximately equal to that of pure paraffin or NaNO₃/KNO₃ eutectic salt and that for the Cu-Fe system is 4 times greater. From the data in Table 1, the energy density of a material containing 50% vol. Si active phase in a SiC matrix would store about 2.24MJ/litre or 11 times greater than the maximum possible using state-of-the-art PCM. Additional benefits are also incurred due to the higher storage temperature and associated efficiency increase of the subsequent conversion process. The time for charge-discharge cycles are also improved due to the higher conductivity of the matrix phase. It can be seen in Table 1 that values range 80-237W/m.K compared with <1 W/m.K for existing technologies. This not only speeds the cycle but also eliminates the need to incorporate heat transfer enhancement elements within the storage tank.

### Adaptability to Renewable or Waste Heat Recovery Technologies.

The use of thermodynamically stable immiscible materials presents a new direction for developing efficient TES using the latent heat of fusion. Material systems can be selected to match the desired working temperature. No external confinement is required as the matrix phase is solid at all times and remains self-supporting. This simplifies the design and improves the safety aspects of large PCM storage tanks as hydraulic pressures are never developed and volume changes on freezing/melting are restricted to within the volume of small active phase particles.

The class of miscibility gap alloys disclosed herein have the capability to considerably reduce demand for conventional forms of energy through, for example, the use of concentrated solar radiation or industrial waste heat recovery and utilisation. This will by definition reduce demand for fossil fuel generated energy leading to substantial environmental gains.

Thermal energy storage is well known, and it is estimated that of the global advanced energy storage capacity of around 2000MW, more than half is stored thermally or in the form of molten salt. The inverse microstructure alloys would potentially be able to secure a large portion of that sector by directly replacing thermal storage materials and associated pumps, heat exchangers, pipework and the like.

With the optimisation of the moderate and high temperature storage materials of the present invention, concentrated solar thermal base load electricity generation becomes increasingly feasible as the intermittency problem due to weather and the diurnal cycle is overcome in a way that allows the use of conventional steam turbine technology. If the solar input is fed directly into the storage block and the heat always extracted via the storage block, then the system can seamlessly continue generating long after the sun has set. In such applications, the storage block also acts as the receiver, negating the need to pump around heat transfer fluids like hot corrosive salts. The manufacturing methods to be used here are suitable for the incorporation of heat exchanger elements directly into the storage material further enhancing its applicability.

In space heating applications, the need for gas or electric heating can be greatly reduced by efficient storage and recovery of surplus heat or solar radiation as appropriate.

As discussed in the previous section, energy storage can be achieved by electrochemical, mechanical or thermal methods. The present invention falls under the thermal energy storage banner, and it will allow the efficient storage of heat energy from a variety of sources (domestic, commercial and industrial furnaces/heaters/engines, flue or waste gas streams, concentrated sunlight, etc.) for later use in heating or electricity generation.

None of the currently employed commercial solutions do this efficiently. Some primitive low temperature thermal storage is undertaken using concrete, or using low melting temperature organics (paraffin) or inorganic salts (KNO₃-NaNO₃ eutectic). These suffer from very low thermal conductivity, and heat is difficult to load into them and extract from them. This necessitates the pumping of molten storage materials in complex and failure prone systems to enable heat transfer, or the use of significant overcapacity coupled with heat transfer enhancing additives such as graphite, although this approach is only marginally successful. The currently employed commercial solutions also have limited energy density per unit volume and so large infrastructure is required to support current storage solutions (except for concrete which has limited capacity and temperature range).

The potential use and value of the present invention in large-scale thermal energy storage for the proposed alloys can be illustrated by comparing it to commercially available sodium nitrate (NaNO₃)/potassium nitrate (KNO₃) molten salt technology, currently applied in large-scale concentrated solar power plants. NaNO₃/KNO₃ molten salt fluid is attractive due to the non-flammable, non-toxic and low cost nature of the salts. However, its application poses significant operation and maintenance challenges. The high temperatures of the molten salt can cause chemical decomposition of the solution and/or corrosion of pipes. Decomposition will require replacing the solution at regular intervals, whilst corrosion resistant pipes are needed to minimise replacement cycles.

Typically, such systems rely upon the sensible heat from the temperature rise in the working fluid. Two tanks are required, a cold tank and a hot tank, between which the molten salt circulates through heat exchangers to extract the stored sensible heat. The molten salt is thus used as the heat transfer fluid. The melting temperature of the salt mixture is 221°C. On cooling, the crystallisation temperature is 238°C. The mix is chemically stable up to 600°C, with typical operative temperatures between 250°C and 550°C. For the system to operate flawlessly, it is vital to maintain the temperature of the system (including piping) above 238°C to ensure molten salt flow. In practice, the consequence of this physical limitation is that only the sensible heat above about 250°C that is stored in the system can be regained, with the sensible and latent heat below 250°C not accessible, as the flow of salt would come to a halt at those lower temperatures.

In comparison, the inverse microstructure alloys of the present invention have no such limitations. All the sensible and latent heat can be extracted, no molten materials have to be pumped around, no hot and cold tanks are required, and thermal conductivity is vastly superior. Whilst the initial outlay for the metals is substantially higher than the salt costs, the reduced operation and maintenance requirements would offer clear savings in the long run.

The following example is aimed at giving an indication of the performance of the two systems. A block of the aluminium-tin inverse microstructure alloy of the present invention (35 vol% Sn in 65 vol% Al) with a volume of one cubic metre is used as the reference. Some of its main properties are summarised in Table 3.

**Table 3: Properties for tin in aluminium inverse microstructure alloy of the present invention**

| Property | Units | Al | Sn | Al-Sn |
|---|---|---|---|---|
| Melting point | °C | 660 | 232 | - |
| Molecular Weight | g/mol | 26.98 | 118.7 | - |
| Density | t/m³ kg/L | 2.71 | 7.31 | 4.32 |
| Latent heat of fusion | kJ/kg MJ/t | 398 | 59 | - |
| Specific heat capacity | kJ/(kg K) | 0.91 | 0.23 | - |
| Thermal conductivity | W/(m K) | 237 | 67 | 153 |
| Content | Vol % | 65 | 35 | 100 |
| | Weight % | 41 | 59 | 100 |
| Total volume | m³ | 0.65 | 0.35 | 1.0 |
| Total mass | t | 1.76 | 2.56 | 4.32 |

Similar properties for the eutectic sodium nitrate/potassium nitrate salt mixture are given in Table 4.

**Table 4: Properties for KNO₃ and NaNO₃ salt mixture¹**

| Property | Unit | KNO₃ | NaNO₃ | KNO₃/NaNO₃ |
|---|---|---|---|---|
| Melting point | °C | 333 | 308 | 221 |
| Molecular Weight | g/mol | 101.1 | 85 | - |
| Density | t/m³ ∥ kg/L | 2.11 | 2.26 | 1.75 |
| Latent heat of fusion | kJ/kg ∥ MJ/t | 118 | 185 | 100 |
| Specific heat capacity | kJ/(kg K) | 0.95 | 1.09 | 1.54 |
| Thermal conductivity of matrix | W/(m K) | - | - | <1 |
| Content | Weight % | 54 | 46 | 100 |

The findings are discussed below, with Table 5 providing a summary of the results from this case study. The Al-Sn case has been chosen since it operates in a comparable temperature range to the molten inorganic salts currently used and presents a very readily substituted alternative. The results for the Cu-Fe systems are better due to their thermodynamic properties but they operate at higher temperatures not currently accessible by existing systems.

**Table 5: Summary of case study results**

| Typical values are given. Values may differ slightly between data sources by up to ~10%. | | | | |
|---|---|---|---|---|
| Density for non-porous graphite used. | | | | |
| Parameter | Unit | Al-Sn | Molten salt | Graphite |
| Energy input (fusion) | MJ | 151 | 282 | 0 |
| Energy input 25°C→250°C (sensible) | MJ | 493 | 976 | 558 |
| Energy input 250°C→550°C (sensible) | MJ | 657 | 1,301 | 743 |
| Total energy input | MJ | 1,301 | 2,558 | 1,301 |
| Energy available for heat exchange | MJ | 1,301 | 1,301 | 1,301 |
| Energy unavailable for heat exchange | MJ | 0 | 1,257 | 0 |
| Energy density (available only) | MJ/L | 1.30 | 0.81 | 0.86 |
| Total volume | m³ | 1.00 | 1.61 | 1.52 |
| Total material input | t | 4.32 | 2.82 | 3.49 |

The total energy that can be stored in 1 m³ of this particular inverse microstructure alloy of the present invention system when heating it up from 25°C to 550°C is 1,301 MJ, which is made up of three components:

| | |
|---|---|
| Latent heat of fusion of tin: | 151 MJ |
| Sensible heat of tin: | 309 MJ |
| Sensible heat of aluminium: | 841 MJ |

Due to the system limitations mentioned previously, heat absorbed by the salt system below 250°C is not accessible for heat exchange purposes (1,257 MJ). Thus, the molten salt has to store all heat stored by the alloy system (1,301 MJ) between 250°C and 550°C as sensible heat. It will require 2.8 t of salt with a volume of 1.6 m³ to do so.

The energy density of the alloy system is 35% higher than the comparable molten salt system on a per volume base.

Thermal conductivity is another major advantage of the inverse microstructure alloys of the present invention, with more than two orders of magnitude better than the salt system (153 Wm⁻¹K⁻¹ compared to less than 1 Wm⁻¹K⁻¹).

The salt is significantly cheaper than the alloy. However, it needs to be kept in mind that significant savings from replacement, operation and maintenance, safety and environmental costs and penalties, and other savings on building materials (no tanks, minimal insulation for piping, diminished corrosion) are considered. It also needs to be borne in mind that the full cost of the inverse microstructure alloy of the present invention material will be recoverable if desired because of high recyclability of the immiscible metals.

Solid blocks of graphite and concrete have also been suggested for thermal energy storage, and the results for graphite are included in Table 4. The inverse microstructure alloys of the present invention are superior to graphite in terms of energy density. However, perhaps more importantly, the inverse microstructure alloys of the present invention provide very high thermal conductivities and allow access to very high temperature applications. Thus, in addition to the thermal storage of solar energy, the inverse microstructure alloys of the present invention also have potential in the following fields:-
- Softening of exothermic temperature peaks in chemical reactions.
- Spacecraft thermal systems.
- Industrial waste heat recovery and conversion
- Load levelling for renewable energy other than solar-thermal (PV, wind, tidal)
- Load levelling for nuclear energy
- Thermal inertia. Thermal inertia applications exploit the slowness of materials approach the temperature of their surroundings. These devices store heat during peak power operation and release the same during reduced power operation. Phase change materials are a member of such a class of thermal storage devices. Phase change materials are very attractive in this case because of their high storage density with small temperature swing. Phase change materials have high heats of fusion, which by melting and solidifying at a certain temperature, are capable of storing and releasing large amounts of energy. The temperature of a Phase change material remains constant during the phase change, which is useful for keeping the subject at a uniform temperature. Heat is absorbed or released when the material changes from solid to liquid and vice versa; thus, PCMs are classified as latent heat storage (LHS) units. Examples of thermal inertia applications may include use in catalytic conversion and braking systems

In addition to such high temperature storage applications as those exemplified above, the alloys of the present invention may also be useful in low temperature energy storage systems such as
- Passive storage in bioclimatic architecture (high-density polyethylene (HDPE) + paraffin).
- Cooling: Use of off-peak rates and reduction of installed power, icebank.
- Heating and sanitary hot water: Using off-peak rate and adapting unloading curves.
- Safety: Temperature maintenance in rooms with computers or electrical appliances.
- Thermal protection of food: Transport, hotel trade, ice-cream, etc.
- Food agro industry, wine, milk products (absorbing peaks in demand), greenhouses.
- Thermal protection of electronic devices (integrated in the appliance).
- Medical applications: Transport of blood, operating tables, hot-cold therapies.
- Cooling of engines (electric and combustion).
- Thermal comfort in vehicles.

### References

[1] OECD/IEA, (2009), "World energy Outlook, 2009". http://www.worldnergy outlook. org/2009. asp
[2] J. Pacheco, R. Bradshaw, D. Dawson, W. De La Rosa, R. Gilbert, S. Goods, M.J. Hale, P. Jacons, S. Jones, G. Kolb, M. Prairie, H, Reilly, S. Showalter and L. Vant-Hull, Final test and evaluation results from the Solar Two project, Solar Thermal Technology Dept., Sandia national Laboratories NM Tech. Rep. SAND2002-120, http//www.osti.gov/bridge/product.biblio.jsp?osti_id=793226
[3] D.B. Fox, D. Sutter, J.W. Tester, The thermal spectrum of low-temperature energy use in the United States, Proc. 36th Workshop on Geothermal Reservoir Eng., University of Stanford, California Jan 31-Feb 2, 2011.
[4] B. Zalba, J.M. Marin, L.F. Cabeza, H. Mehling, Review on thermal energy storage with phase change: materials, heat transfer analysis and applications, Applied Thermal Engineering 23 (2003) 251-283.
[5] A. Sharma, V.V. Tyagi, C.R. Chen, D. Buddhi, Review on thermal energy storage with phase change materials and applications, Renewable and Sustainable. Energy Reviews 13 (2009) 318345.
[6] M. Kenisarin, High-temperature phase change materials for thermal energy storage, Renewable and Sustainable Energy Reviews, 14 (2010) 955-970.
[7] J.Q. Sun, R.Y. Zhang, Z.P. Liu, G.H. Lu, Thermal reliability test of Al-34%Mg-6%Zn alloy as latent heat storage material and corrosion of metal with respect to thermal cycling, Energy Conversion and Management 48 (2007) 619-624.
[8] T. Nomura, N. Okinaka, T. Akiyama, Technology of Latent Heat Storage for High Temperature Application: A Review, ISIJ Int. 50, 9, (2010) 1229-1239.
[9] A. Sari, A. Karaipekli, Thermal conductivity and latent heat thermal energy storage characteristics of paraffin/expanded graphite composite as phase change material, Applied Thermal engineering 27 (2007) 1271-1277.
[10] R. Bayón, E. Rojas, L. Valenzuela, E. Zarza, J. León, Analysis of the experimental behaviour of a 100 kWth latent heat storage system for direct steam generation in solar thermal power plants, Applied Thermal Engineering 30 (2010) 2634-2651.
[11] N. Marouka, K. Sato, J. Yagi, T. Akiyama, Development of PCM for recovering high temperature waste heat and utilization for producing hydrogen by reforming reaction of methane, ISIJ International, 42, 2, (2002), 215-219.
[12] A. Abhat, Low temperature latent heat thermal energy storage: heat storage materials, Solar Energy, 30, (1983), 313-332.
[13] H. Baker editor, ASM Metals Handbook, 10th Edition, Volume 3 Phase Diagrams ASM International, Ohio, 1992.
[14] G. Aylward, T. Findlay, SI Chemical Data, 5th edition, Wiley Brisbane, 2002.
[15] EP 0 087 859 A1.
[16] ES 2 336 741 A2.
[17] FR 2 875 432 A1.

## Claims

1. A method of storing and discharging energy that operates through the latent heat of fusion of a dispersed component, the method comprising:
thermally contacting a thermal storage material with a thermal energy source to heat the thermal storage material by thermal absorption thereto, thereby to provide a charged thermal storage material;
thermally contacting the charged thermal storage material with a thermal sink, to cool the thermal storage material by thermal emission therefrom, thereby to provide a discharged thermal storage material; and
wherein the thermal storage material is a thermal storage material comprising:
(i) a dense continuous thermally conductive matrix of a first component;
(ii) microparticles of a second component dispersed throughout the matrix of the first component;
wherein the first and second components are wholly or partly immiscible and wherein the first component melts at a higher temperature than the second component;
wherein the first component encapsulates the second component, including when the second component is in a molten or flowable state;
wherein the second component is present in an amount of 10% to less than 70% by volume of the thermal storage material; and
wherein the first component is metallic and the second component is metallic; or
wherein the first component is metallic and the second component is non-metallic; or
wherein the first component is non-metallic and the second component is metallic.

2. A method according to claim 1 wherein the first component is metallic and the second component is metallic.

3. A method according to claim 1 wherein the first component is metallic and the second component is non-metallic.

4. A method according to claim 1 wherein the first component is non-metallic and the second component is metallic.

5. A method according to any one of the preceding claims wherein the non-metallic component is organic.

6. A method according to any one of the preceding claims wherein the second component is present in an amount of at least 25% by volume of the thermal storage material.

7. A method according to any one of the preceding claims wherein the particles of the second component are regular in shape and/or size.

8. A method according to any one of the preceding claims wherein the particles of the second component are spherical.

9. A method according to any one of the preceding claims wherein the particles of the second component are <100µm in size.

10. A method according to any one of the preceding claims wherein the particles are at least two orders of magnitude (>100x) smaller than the overall storage block dimension into which the thermal storage material is formed.

## Patentansprüche

1. Verfahren zum Speichern und Abgeben von Energie, das durch die latente Schmelzwärme einer dispergierten Komponente funktioniert, wobei das Verfahren umfasst:
thermisches Inkontaktbringen eines Wärmespeichermaterials mit einer Wärmeenergiequelle, um das Wärmespeichermaterial durch Wärmeabsorption zu erwärmen und dadurch ein geladenes Wärmespeichermaterial bereitzustellen;
thermisches Inkontaktbringen des geladenen Wärmespeichermaterials mit einer Wärmesenke, um das Wärmespeichermaterial durch Wärmeabgabe davon zu kühlen, wodurch ein entladenes Wärmespeichermaterial bereitgestellt wird; und
wobei das Wärmespeichermaterial ein Wärmespeichermaterial ist, das umfasst:
(i) eine dichte, kontinuierliche, wärmeleitende Matrix aus einer ersten Komponente;
(ii) Mikropartikeln einer zweiten Komponente, die in der Matrix der ersten Komponente verteilt sind;
wobei die erste und die zweite Komponenten ganz oder teilweise unmischbar sind und wobei die erste Komponente bei einer höheren Temperatur schmilzt als die zweite Komponente;
wobei die erste Komponente die zweite Komponente einkapselt, auch wenn sich die zweite Komponente in einem geschmolzenen oder fließfähigen Zustand befindet;
wobei die zweite Komponente in einer Menge von 10 % bis weniger als 70 % des Volumens des Wärmespeichermaterials vorhanden ist; und
wobei die erste Komponente metallisch ist und die zweite Komponente metallisch ist; oder
wobei die erste Komponente metallisch ist und die zweite Komponente nichtmetallisch ist; oder
wobei die erste Komponente nichtmetallisch ist und die zweite Komponente metallisch ist.

2. Verfahren gemäß Anspruch 1, wobei die erste Komponente metallisch ist und die zweite Komponente metallisch ist.

3. Verfahren gemäß Anspruch 1, wobei die erste Komponente metallisch ist und die zweite Komponente nichtmetallisch ist.

4. Verfahren gemäß Anspruch 1, wobei die erste Komponente nichtmetallisch ist und die zweite Komponente metallisch ist.

5. Verfahren gemäß mindestens einem der vorstehenden Ansprüche, wobei die nichtmetallische Komponente organisch ist.

6. Verfahren gemäß mindestens einem der vorstehenden Ansprüche, wobei die zweite Komponente in einer Menge von mindestens 25 % des Volumens des Wärmespeichermaterials vorhanden ist.

7. Verfahren gemäß mindestens einem der vorstehenden Ansprüche, wobei die Partikel der zweiten Komponente eine regelmäßige Form und/oder Größe aufweisen.

8. Verfahren gemäß mindestens einem der vorstehenden Ansprüche, wobei die Partikel der zweiten Komponente kugelförmig sind.

9. Verfahren gemäß mindestens einem der vorstehenden Ansprüche, wobei die Partikel der zweiten Komponente eine Größe von <100 µm aufweisen.

10. Verfahren gemäß mindestens einem der vorstehenden Ansprüche, wobei die Partikel mindestens zwei Größenordnungen (>100x) kleiner sind als die Gesamtabmessung des Speicherblocks, zu dem das Wärmespeichermaterial geformt ist.

## Revendications

1. Procédé de stockage et de décharge d'énergie fonctionnant grâce à la chaleur latente de fusion d'un composant dispersé, le procédé comprenant :
la mise en contact thermique d'un matériau de stockage thermique avec une source d'énergie thermique pour chauffer le matériau de stockage thermique par absorption thermique vers celui-ci, pour fournir par ce moyen un matériau de stockage thermique chargé ;
la mise en contact thermique du matériau de stockage thermique chargé avec un bassin thermique pour refroidir le matériau de stockage thermique par émission thermique à partir de celui-ci, pour fournir par ce moyen un matériau de stockage thermique déchargé ; et
dans lequel le matériau de stockage thermique est un matériau de stockage thermique comprenant :
(i) une matrice thermoconductrice continue dense constituée d'un premier composant ;
(ii) des microparticules d'un second composant dispersées dans la matrice du premier composant ;
dans lequel les premier et second composants sont totalement ou partiellement non miscibles et dans lequel le premier composant fond à une température plus élevée que le second composant ;
dans lequel le premier composant encapsule le second composant, y compris lorsque le second composant est dans un état fondu ou fluide ;
dans lequel le second composant est présent dans une quantité de 10 % à moins de 70 % en volume du matériau de stockage thermique ; et
dans lequel le premier composant est métallique et le second composant est métallique ; ou dans lequel le premier composant est métallique et le second composant est non métallique ; ou
dans lequel le premier composant est non métallique et le second composant est métallique.

2. Procédé selon la revendication 1 dans lequel le premier composant est métallique et le second composant est métallique.

3. Procédé selon la revendication 1 dans lequel le premier composant est métallique et le second composant est non métallique.

4. Procédé selon la revendication 1 dans lequel le premier composant est non métallique et le second composant est métallique.

5. Procédé selon l'une quelconque des revendications précédentes dans lequel le composant non métallique est organique.

6. Procédé selon l'une quelconque des revendications précédentes dans lequel le second composant est présent dans une quantité d'au moins 25 % en volume du matériau de stockage thermique.

7. Procédé selon l'une quelconque des revendications précédentes dans lequel les particules du second composant sont de forme régulière et/ou de taille régulière.

8. Procédé selon l'une quelconque des revendications précédentes dans lequel les particules du second composant sont sphériques.

9. Procédé selon l'une quelconque des revendications précédentes dans lequel les particules du second composant présentent une taille de < 100 µm.

10. Procédé selon l'une quelconque des revendications précédentes dans lequel les particules sont au moins deux ordres de grandeur (> 100x) plus petites que la dimension globale du bloc de stockage dans lequel le matériau de stockage thermique est formé.
